Europäisches Patentamt

European Patent Office

Office européen des brevets

(19)

(11) Veröffentlichungsnummer : **0 374 588 B1**

(12)

# EUROPÄISCHE PATENTSCHRIFT

(45) Veröffentlichungstag der Patentschrift :
**28.10.92 Patentblatt 92/44**

(51) Int. Cl.$^5$ : **A01D 34/74**

(21) Anmeldenummer : **89122498.2**

(22) Anmeldetag : **06.12.89**

(54) **Rotationsmähwerk.**

(30) Priorität : **17.12.88 DE 8815674 U**

(43) Veröffentlichungstag der Anmeldung :
**27.06.90 Patentblatt 90/26**

(45) Bekanntmachung des Hinweises auf die
Patenterteilung :
**28.10.92 Patentblatt 92/44**

(84) Benannte Vertragsstaaten :
**AT BE CH DE ES FR GB IT LI NL SE**

(56) Entgegenhaltungen :
**EP-A- 0 272 385**
**CH-A- 428 299**
**CH-A- 465 945**

(56) Entgegenhaltungen :
**DE-A- 3 316 204**
**DE-A- 3 622 855**
**DE-U- 8 815 675**
**GB-A- 2 159 684**
**NL-A- 7 805 129**
**NL-A- 8 002 780**

(73) Patentinhaber : **Alois Pöttinger**
**Maschinenfabrik GmbH**
**A-4710 Grieskirchen (AT)**

(72) Erfinder : **Leposa, Wolfgang**
**Sonnfeldstrasse 17**
**A-4710 Grieskirchen (AT)**

(74) Vertreter : **Dupal, Helmut, Dipl-Ing.**
**Jägerweg 12**
**A-4702 Wallern (AT)**

EP 0 374 588 B1

Jouve, 18, rue Saint-Denis, 75001 PARIS

## Beschreibung

Die Erfindung bezieht sich auf ein Rotationsmähwerk mit den gattungsbildenden Merkmalen des Anspruches 1.

Bei Maschinen dieser Gattung ist die Höhenverstellung des Mähtellers zur Veränderung der Schnitthöhe des Mähwerkes sehr aufwendig, wenn die Verstellung in einfacher Weise und störungsfrei möglich sein soll.

Bei einer früheren Ausführungsform dieser Mähwerke wurde eine Hohlachse zur Verstellung verwendet, um damit den Spalt zwischen Mähteller und Stützteller konstant zu halten. Gleichzeitig wurde der Stützteller geteilt und ein innerer Teil für die Höhenverstellung axial verschiebbar angeordnet, wodurch zusätzlich eine günstige Aufteilung der bei der Arbeit auftretenden Stützkräfte möglich war.

Nachteilig war der sehr aufwendige Aufbau der Höhenverstellung und die freie Drehbarkeit des äußeren und des inneren Stütztellers gegeneinander (FR-A-2317868).

Bei einer anderen Maschine dieser Gattung versucht man die Höhenverstellung des inneren Stütztellers dadurch zu bewerkstelligen, daß dieser mit einer Nabe auf der Nabe des äußeren Stütztellers axial verschieblich und drehbar gelagert ist und mittels einer Abstandverschraubung zwischen den beiden Naben axial verstellbar und in der Drehung gehemmt ist. Die Verstellung erfolgt durch Betätigung der Verschraubung von oben her (DE-A-33 16 204).

Nachteilig bei dieser wesentlich einfacher aufgebauten Höhenverstellung ist die notwendigerweise einseitige Verschraubung der beiden Naben zueinander, wodurch sich diese verziehen können, insbesonders auch durch Auswirkungen der auftretenden Stützkräfte vom Boden her. Überdies ist die Verstellvorrichtung von verdrehenden Kräften zwischen den Stütztellern nicht entlastet, was zu Störungen und Schäden Anlaß geben kann. Schließlich neigt die Verschraubung selbst bei den auftretenden Arbeitsbedingungen zum Verstellen und kann nur mit bedeutendem Aufwand abgesichert werden.

Mit der Erfindung soll ein Rotationsmähwerk so fortgebildet werden, daß die beschriebenen Nachteile nicht auftreten und eine einfach aufgebaute, einfach zu bedienende Höhenverstellvorrichtung geschaffen wird.

Dies wird bei einem Rotationsmähwerk der eingangs beschriebenen Gattung mit den Merkmalen des kennzeichnenden Teiles des Anspruches 1 erreicht.

Die dadurch geschaffene Höhenverstellvorrichtung ergibt eine exakte Führung der inneren Stütztellernabe in Axialrichtung, bei der sich Stützkräfte auf das Verstellgetriebe selbst nicht, oder nur mehr geringfügig auswirken und bei der keine ungewollte Verstellung bei der Arbeit auftreten kann. Gleichzeitig sind die notwendigen Abänderungen bekannter Mähwerkskonstruktionen auf den Bereich der Stützteller beschränkt und umfassen wenige Bauteile.

Die Unteransprüche 2 bis 9, die gleichzeitig Bestandteil der Beschreibung sind, betreffen besonders vorteilhafte Ausgestaltungen der Erfindung.

Die innere Stütztellernabe trägt in der niedrigen Einstellung über ihre ganze Länge und in der höchsten Schnitthöheneinstellung noch immer über einen großen Teil ihrer Länge, wodurch eine sehr genaue Führung erreicht wird.

Die Anwendung einer Schiebekeilverbindung zwischen innerer und äußerer Stütztellernabe ergibt dabei eine Verbindung die Radialkräfte abstützt und dadurch die Höhenverstellvorrichtung entlastet.

Die Verstellung zwischen Anschlägen verhindert zu weites Herausschieben der inneren Stütztellernabe.

Die Stirnradverzahnung der Ritzel ergibt eine selbsthemmende Verstellung, wenn die Radialkräfte abgeleitet sind, sodaß keine Fixierung vorgesehen werden muß, was wiederum die Handhabung der Verstellvorrichtung vereinfacht. Die umgreifende Halterung des Ritzels und deren Verschraubung an der äußeren Stütztellernabe ergibt eine sehr stabile Anordnung, so daß die Verstellvorrichtung weitgehend frei von verformenden Kräften bleibt.

Die beidseitige Lagerung des Verstellritzels verbessert ebenfalls die stabile Anordnung und gibt die Möglichkeit die Verstellung sowohl von oben als auch von unten - bei hochge - schwenktem Mähwerk - vorzunehmen.

Die Ausbildung des inneren und des äußeren Stütztellers in dem aneinandergrenzenden Bereich, so daß eine Dichtwirkung erzielt wird, verhindert das Eindringen von Schmutz in das Innere des Mähwerkes, das bei Verstellungen dieser Art sehr häufig Anlaß zu Störungen gibt, weil sich der Zwischenraum mit Erde anfüllt.

Die Erfindung ist nachstehend an Hand eines bevorzugten Ausführungsbeispieles beschrieben.

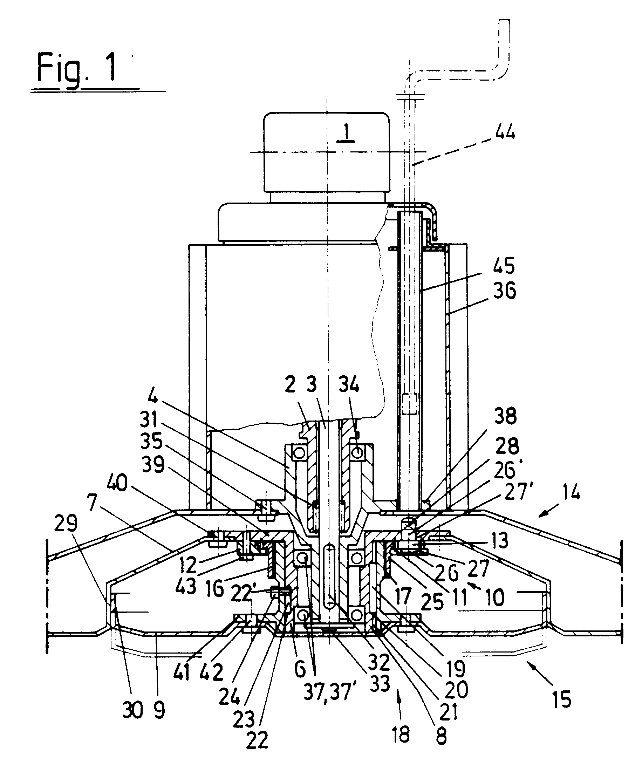

Die einzige Figur zeigt einen Mähkreisel im Seitenriß, in den wesentlichen Teilen geschnitten, den darüberliegenden Mähwerksrahmen angedeutet.

An einem Mähwerksrahmen 1 eines Rotationsmähwerkes ist ein Führungsrohr 2 angeschraubt- nicht dargestellt- in dem eine Antriebswelle 3 an dessen unterem Ende in einem Wälzlager 31 gelagert ist. Auf der Antriebswelle 3 ist eine Mähtellernabe 4 mit einem Keil 32 aufgekeilt und mit einer Verschraubung 33 gesichert.

Die Mähtellernabe 4 ist an ihrem oberen Ende an dem Führungsrohr 2 mit einem Wälzlager 34 gelagert und mit einem Flansch 38 versehen, mit dem sie mit der Verschraubung 35 mit einem Mähteller 5 verschraubt ist, der an seinem Außenrand - nicht dargestellt- die Mähklingen trägt und nach oben zu mit einer Trommel 36 versehen ist.

An der Mähtellernabe 4 ist in der Unterhälfte eine äußere Stütztellernabe 6 mit zwei Wälzlagern 37,37' gelagert, die an ihrem oberen Ende einen Flansch 39 trägt, an dem mit der Verschraubung 40 ein äußerer Stützteller 7 befestigt ist, der mit dem Außenrand des Mähtellers 5 einen Spalt - nicht dargestellt- bildet, durch den die Mähklingen herausragen und der nicht veränderbar ist.

Auf der äußeren Stütztellernabe 6 ist eine innere Stütztellernabe 8 axial verschiebbar und gegen Verdrehung mit einer Keilführung 18 gesichert, angebracht, die aus einer Keilnut 20 der äußeren Stütztellernabe 6 und einer durchgehenden Keilnut 21 an der inneren Stütztellernabe 8 und einem Keil 19 besteht. Die innere Stütztellernabe 8 trägt am unteren Ende einen Flansch 41, an dem mit der Verschraubung 42 der innere Stützteller 9 befestigt ist.

Die axiale Verschiebbarkeit der inneren Stütztellernabe 8 ist mit einer Anschlagschraube 24 gehemmt, die eine Verstellung zwischen zwei Anschlägen 22,22' einer Längsnut 23 der äußeren Stütztellernabe 6 zuläßt.

Der obere Teil der inneren Stütztellernabe 8 ist mit einem Außengewinde 16 versehen, in dem ein Ritzel 11 mit Stirnradverzahnung einer Höhenverstellvorrichtung 10 mit einem Innengewinde 17 kämmt und dessen Nabe 25 verlängert ist.

Das Ritzel 11 ist von einer Ritzelhalterung 12 außen umgriffen, die mit der Verschraubung 43 an dem Flansch 39 der äußeren Stütztellernabe 6 verschraubt ist.

Mit dem Ritzel 11 kämmt ein Verstellritzel 13, dessen beidseitige Wellenstummel 26,26' in Lagerbohrungen 27,27' im Flansch 39 der äußeren Stütztellernabe und in der Ritzelhalterung 12 gelagert sind und deren nach der Kreiseloberseite 14 zu gerichteter Wellenstummel 26' einen Schlüsselzapfen 28 aufweist, mit dem das Verstellritzel 13 über einen Schlüssel 44, der durch ein Rohr 45 geführt ist, angetrieben werden kann, wodurch die Höhenverstellvorrichtung 10 verstellt und damit die Schnitthöhe des Mähwerkes eingestellt wird.

Der innere Stützteller 9, dessen Stellung für die große Schnitthöhe angedeutet ist, ist mit einem zylindrischen Außenrand 30 versehen, der in einer zylindrischen Einziehung 29 des äußeren Stütztellers 7 dichtend geführt ist.

**Patentansprüche**

1. Rotationsmähwerk mit wenigstens zwei Mähkreiseln,die jeweils an einem obenliegenden Mähwerkrahmen (1) mit einer Antriebswelle gelagert sind, mit der eine,einen Mähteller (5) tragende Mähtellernabe (4) aufgekeilt ist, auf der eine, einen äußeren Stützteller tragende äußere Stütztellernabe (6) frei drehbar gelagert ist, auf der wiederum eine innere Stütztellernabe (8), die einen inneren Stützteller (9) trägt, unverdrehbar und mit einer Höhenverstellvorrichtung (10) axial verschiebbar gelagert ist, dadurch gekennzeichnet, daß die innere Stütztellernabe (8), die mit dem inneren Stützteller (9) fest verbunden ist, ein Außengewinde (16) trägt, auf dem ein Ritzel (11) mit einem Innengewinde (17) aufgeschraubt ist, das gegen axiale Verschiebung von einer Ritzelhalterung (12) gesickert und von einem Verstellritzel (13) antreibbar ist, das von der Kreiseloberseite (14) oder von der Kreiselunterseite (15) betätigbar ist.

2. Rotationsmähwerk nach Anspruch 1, dadurch gekennzeichnet, daß die innere Stütztellernabe (8) eine axiale Länge aufweist, die im wesentlichen der gesamten axialen Länge der äußeren Stütztellernabe (6) entspricht und mit einer Keilführung (18) axial verschiebbar gelagert ist.

3. Rotationsmähwerk nach Anspruch 2, dadurch gekennzeichnet, daß die Keilführung (18) aus einem Keil (19) in der Keilnut (20) der äußeren Stütztellernabe (6) und einer durchgehenden Keilnut (21) in der inneren Stütztellernabe (8) gebildet ist.

4. Rotationsmähwerk nach einem der Ansprüche 1 bis 3, dadurch gekennzeichnet, daß die innere Stütztellernabe (8) zwischen Anschlägen (22,22') axial verstellbar ist, die vorzugsweise von einer Längsnut (23) an der äußeren Stütztellernabe (6) und einer Anschlagschraube (24) an der inneren Stütztellernabe (8) gebildet sind.

5. Rotationsmähwerk nach Anspruch 1, dadurch gekennzeichnet, daß das Ritzel (11) der Höhenverstellvorrichtung (10) eine verlängerte Nabe (25) für das Innengewinde (17) aufweist.

6. Rotationsmähwerk nach Anspruch 1 oder 5, dadurch gekennzeichnet, daß das Ritzel (11) mit Stirnradverzahnung versehen ist, mit der das Verstellritzel (13) kämmt.

7. Rotationsmähwerk nach Anspruch 1, dadurch gekennzeichnet, daß die Ritzelhalterung (12) das Ritzel (11) von außen umgreift und an der äußeren Stütztellernabe (6) verschraubt ist.

8. Rotationsmähwerk nach Anspruch 1 oder 6, dadurch gekennzeichnet, daß das Verstellritzel (13) beiderseits mit Wellenstummeln (26,26') in Lagerbohrungen (27,27') der äußeren Stütztellernabe (6) und der Ritzelhalterung (12) gelagert ist, die nach oben und/oder nach unten mit Schlüsselzapfen (28) für die Betätigung der Höhenverstellvorrichtung (10) versehen sind.

9. Rotationsmähwerk nach Anspruch 1, dadurch gekennzeichnet, daß die innere Stütztellernabe (8)mit dem inneren Stützteller (9) verschraubt ist, dessen Außenrand (30) koaxial zylindrisch ausgebildet ist und an einer koaxialen zylindrischen Einziehung (29) des äußeren Stütztellers (7) dichtend anliegt, deren axiale Höhe der maximalen Höhenverstellung des inneren Stütztellers (9) mehr als entspricht.

## Claims

1. A rotary mower comprising at least two cutting rotors mounted in each case on an upper mower frame (1) by means of a drive shaft, onto which a cutting disc hub (4) supporting a cutting disc (5) is wedged, on which cutting disc hub 4 an outer supporting disc hub (6) supporting an outer supporting disc is freely rotatably mounted, an inner supporting disc hub (8) supporting an inner supporting disc (9) being in turn mounted upon said outer supporting disc hub (6) so as to be rotatably fixed and axially displaceable by means of a height adjustment device (10), characterised in that the inner supporting disc hub (8), which is securely connected with the inner supporting disc (9), supports an external thread (16), on which a pinion (11) with an internal thread (17) is screwed, which pinion is secured against axial displacement by a pinion mounting (12) and is drivable by an adjusting pinion (13), which can be actuated from the rotor upper side (14) or from the rotor underside (15).

2. A rotary mower according to claim 1, characterised in that the inner supporting disc hub (8) has an axial length essentially corresponding to the overall axial length of the outer supporting disc hub (6) and is axially displaceably mounted by means of a wedge guide (18).

3. A rotary mower according to claim 2, characterised in that the wedge guide (18) comprises a wedge (19) in the wedge groove (20) of the outer supporting disc hub (6) and a continuous wedge groove (21) in the inner supporting disc hub (8).

4. A rotary mower according to one of claims 1 to 3, characterised in that the inner supporting disc hub (8) is axially displaceable between abutments (22, 22'), which are preferably formed by a longitudinal groove (23) on the outer supporting disc hub (6) and a stop screw (24) on the inner supporting disc hub (8).

5. A rotary mower according to claim 1, characterised in that the pinion (11) of the height adjustment device (10) comprises an elongated hub (25) for the internal thread (17).

6. A rotary mower according to claim 1 or 5, characterised in that the pinion (11) is provided with a spur gearing toothing meshing with the adjusting pinion (13).

7. A rotary mower according to claim 1, characterised in that the pinion mounting (12) encloses the pinion (11) from the outside and is screwed to the outer supporting disc hub (6).

8. A rotary mower according to claim 1 or 6, characterised in that the adjusting pinion (13) is mounted on both sides with shaft stubs (26, 26') in bearing bores (27, 27') of the outer supporting disc hub (6) and pinion mounting (12), which are provided at the top and/or at the bottom with key journals (28) for operating the height adjustment device (10).

9. A rotary mower according to claim 1, characterised in that the inner supporting disc hub (8) is screwed to the inner supporting disc (9), whose outer edge (30) is coaxially cylindrical and rests in a sealing-tight manner against a coaxially cylindrical indentation (29) of the outer supporting disc (7), whose axial height more than corresponds to the maximum height adjustment of the inner supporting disc (9).

## Revendications

1. Mécanisme de fauchage rotatif comprenant au moins deux groupes rotatifs de fauchage qui sont respectivement montés, sur un bâti supérieur du mécanisme, par un arbre d'entrainement sur lequel est claveté un moyeu qui porte un disque de fauchage et sur lequel est monté, à rotation libre, un moyeu externe portant un disque extérieur de soutien, et sur lequel est à son tour monté, sans aucune faculté de rotation et avec faculté de coulissement axial, par l'intermédiaire d'un dispositif de réglage en hauteur, un moyeu interne portant un disque intérieur de soutien, mécanisme caractérisé par le fait que ledit moyeu interne (8), relié rigidement audit disque intérieur de soutien (9), porte un filetage externe (16) sur lequel est vissé, par un filetage interne (17), un pignon (11) dont le coulissement axial est interdit par l'intermédiaire d'un élément de retenue (12), et qui peut être entraîné par un pignon de réglage (13) actionnable à partir de la face supérieure (14) ou de la face inférieure (15) desdits groupes rotatifs.

**2.** Mécanisme selon la revendication 1, caractérisé par le fait que le moyeu interne (8) portant un disque de soutien est monté à coulissement axial au moyen d'un système (18) de guidage par clavette, et présente une longueur axiale correspondant pour l'essentiel à toute la longueur axiale du moyeu externe (6) portant un disque de soutien.

**3.** Mécanisme selon la revendication 2, caractérisé par le fait que le système (18) de guidage par clavette se compose d'une clavette (19) logée dans la rainure de clavetage (20) du moyeu externe (6), et d'une rainure ininterrompue de clavetage (21) pratiquée dans le moyeu interne (8).

**4.** Mécanisme selon l'une quelconque des revendications 1 à 3, caractérisé par le fait que le moyeu interne (8) est réglable axialement entre des arrêts (22, 22') qui sont formés, de préférence, par une fente longiligne (23) ménagée sur le moyeu externe (6), et par une vis de butée (24) située sur ledit moyeu interne (8).

**5.** Mécanisme selon la revendication 1, caractérisé par le fait que le pignon (11) du dispositif (10) de réglage en hauteur présente un moyeu prolongé (25) pour le filetage interne (17).

**6.** Mécanisme selon la revendication 1 ou 5, caractérisé par le fait que le pignon (11) est pourvu d'une denture droite, avec laquelle le pignon de réglage (13) est en prise.

**7.** Mécanisme selon la revendication 1, caractérisé par le fait que l'élément de retenue (12) emprisonne le pignon (11) de l'extérieur, et est boulonné sur le moyeu externe (6) portant un disque de soutien.

**8.** Mécanisme selon la revendication 1 ou 6, caractérisé par le fait que le pignon de réglage (13) est monté de part et d'autre, par des bouts d'axes (26, 26'), dans des trous de montage (27, 27') ménagés dans l'élément de retenue (12) et dans le moyeu externe (6), lesdits bouts d'axes étant munis, vers le haut et éventuellement, ou en variante, vers le bas, de tenons (28) d'engagement d'une clé pour l'actionnement du dispositif (10) de réglage en hauteur.

**9.** Mécanisme selon la revendication 1, caractérisé par le fait que le moyeu interne (8) est boulonné sur le disque intérieur de soutien (9) dont le rebord externe (30) est de réalisation coaxialement cylindrique et est appliqué, de manière étanche, contre une zone coaxiale cylindrique encaissée (29) du disque extérieur de soutien (7), dont la hauteur axiale est dimensionnée supérieure à la course maximale en hauteur dudit disque intérieur de soutien (9).

# Fig. 1